# DEMANDE DE BREVET EUROPEEN

(11) **EP 2 574 983 A1**
(43) Date de publication de la demande: **03.04.2013**
(21) Numéro de dépôt: 12186527.3
(22) Date de dépôt: 28.09.2012
(51) Int. Cl.: G03F 7/20, B23K 26/18, B23K 26/36, B23K 26/00, B23K 26/04

(54) **Procédé et dispositif de lithographie**

(30) Priorité: 30.09.2011 FR 1158861
(71) Demandeur: COMMISSARIAT A L'ENERGIE ATOMIQUE ET AUX ENERGIES ALTERNATIVES, 75015 Paris (FR)
(72) Inventeur: Martinez, Christophe, 38100 Grenoble (FR); Boulitreau, Pascal, 38360 Sassenage (FR); Laulagnet, Fabien, 38600 Fontaine (FR)
(74) Mandataire: de Beaumont, Michel

(57) **Abrégé**

L'invention concerne une installation de gravure d'au moins une plaquette revêtue d'une couche photosensible vierge (32), prête à être gravée, cette plaquette présentant des irrégularités d'épaisseur, dans laquelle :
la plaquette (30) est disposée pour pouvoir être soumise au balayage d'un faisceau d'irradiation,
une feuille (33) transparente au rayonnement auquel la couche photosensible est sensible recouvre la plaquette, et
il est prévu un faisceau sonde destiné à se réfléchir sur la partie supérieure de ladite feuille au droit du spot du faisceau d'irradiation sur la couche photosensible.

## Description

### Domaine de l'invention

La présente invention concerne des procédés et dispositifs de lithographie, destinés à graver un motif sur une plaquette.

### Exposé de l'art antérieur

De façon générale, un procédé de lithographie est un procédé dans lequel on dépose sur un matériau à graver, une couche dite photosensible ou thermosensible, dont les propriétés sont modifiées par suite d'une irradiation. Par exemple, l'irradiation provoque dans la couche sensible une transformation chimique qui rend cette couche sélectivement attaquable par un produit de gravure. Ensuite, la couche affectée par le rayonnement (ou inversement la partie de couche non affectée) est éliminée et les parties restantes servent de masque pour graver le substrat sur lequel cette couche sensible a été déposée. De nombreuses variantes de ces procédés existent. Par exemple, bien souvent, une couche intermédiaire est déposée entre le substrat et la couche sensible et la gravure de la couche sensible est suivie d'une gravure de la couche intermédiaire et ensuite seulement d'une gravure du substrat. La couche peut être photosensible au sens propre, c'est-à-dire que ce sont les photons qui interagissent avec le matériau de la couche photosensible pour en modifier l'état, ou thermosensible, c'est-à-dire que c'est la chaleur produite par le rayonnement d'irradiation qui modifie la couche sensible.

Parmi les couches thermosensibles, certaines réagissent à l'irradiation en étant rendues volatilisables ou pulvérulentes, et alors, il n'est plus nécessaire de procéder à une gravure par un produit d'attaque chimique, mais les parties irradiées peuvent être simplement éliminées par soufflage ou frottement des zones rendues pulvérulentes. En d'autres termes, ce sont les propriétés d'adhérence de la couche thermosensible sur la couche sous-jacente qui sont modifiées.

De façon générale, pour irradier à des emplacements choisis de la couche sensible, on procède à un balayage par un faisceau laser. La tendance est de plus en plus d'utiliser des faisceaux laser dans le domaine de l'ultraviolet proche pour permettre de réduire la taille du spot sur la couche sensible. On utilisera par exemple des longueurs d'onde de l'ordre de 400 nm ou moins.

Lors du balayage de la couche photo ou thermosensible, il faut maintenir avec une très grande précision la distance entre le système optique de focalisation du faisceau laser d'irradiation et la surface de la couche photosensible. Pour régler cette distance, on ne peut utiliser le faisceau laser d'irradiation lui-même car ce faisceau est intermittent de façon à irradier seulement les zones choisies. On utilise donc un faisceau sonde qui passe par le système optique de focalisation du faisceau d'irradiation principal et se réfléchit sur la couche à irradier de façon à détecter en permanence la distance entre le système optique de focalisation et la couche à irradier (ou plus exactement à détecter toute variation de cette distance) et on utilise les informations recueillies par ce faisceau sonde pour asservir la distance entre le système optique de focalisation et la couche à irradier. Il se pose toutefois une difficulté, dans le cas où la surface à irradier présente des variations brutales d'épaisseur ou des perforations, car alors le signal d'asservissement est perdu. Ainsi, ces procédés à faisceau sonde utilisés de façon classique permettent d'assurer un asservissement en position seulement sur des surfaces régulières. Ceci constitue un premier problème que la présente invention vise à résoudre.

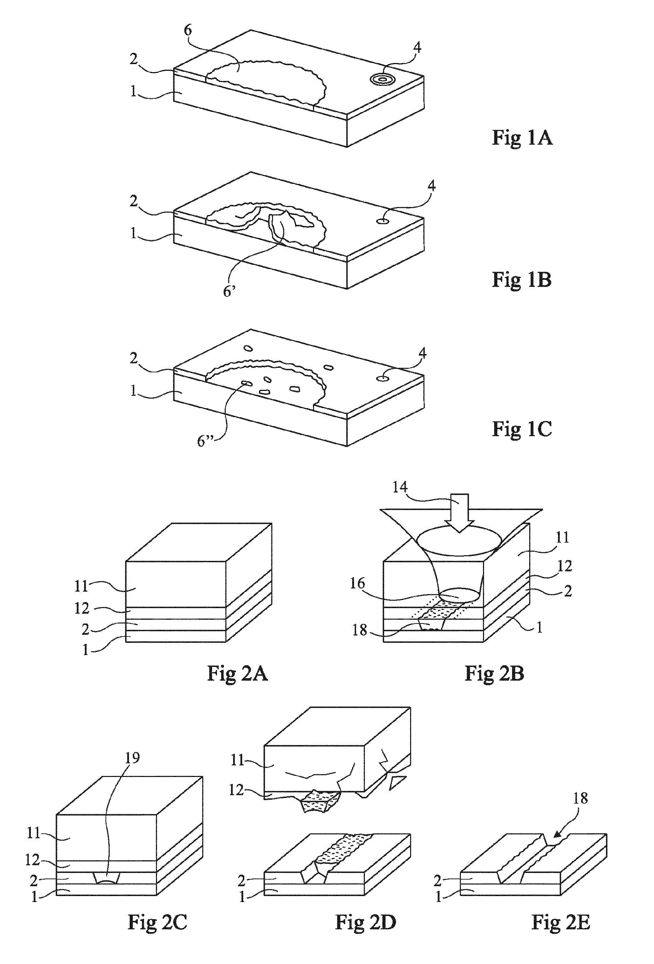

Par ailleurs, dans le cas particulier où le matériau sensible à une irradiation est un matériau dans lequel la variation des propriétés de la couche sensible consiste en une variation d'adhérence des portions irradiées, ce qui est le cas par exemple d'un matériau du type PtOₓ, qui par suite d'une irradiation se transforme en platine pulvérulent, il se pose un autre problème qui va être décrit en relation avec les figures 1A à 1C.

Les figures 1A à 1C représentent un substrat 1, par exemple en verre, en saphir, ou autre, revêtu d'une couche 2 d'un matériau thermosensible dont l'adhérence varie en fonction d'une irradiation. Sur le substrat 1, on veut former d'une part une ouverture 4 de dimension minimale, d'autre part une ouverture 6 de dimension nettement supérieure à la dimension minimale.

La figure 1A représente le résultat de l'irradiation dans un cas optimal : la zone irradiée est régulièrement transformée et, ensuite, on peut éliminer la partie de la couche de PtOₓ transformée en platine dans la région de l'ouverture 6 par brossage ou soufflage, cette portion de couche n'ayant plus qu'une faible adhérence sur le substrat 1.

Malheureusement, en fait, après irradiation, ou au cours de l'irradiation, la couche 2 se transforme dans la région irradiée 6' de la façon illustrée en figure 1B. La couche est partiellement pulvérisée pendant l'irradiation et il en résulte la formation de copeaux qui, comme l'illustre la figure 1C, demeurent sur des portions 6" de l'ouverture. Ces copeaux peuvent être projetés sur le système optique d'irradiation, et peuvent perturber l'écriture en masquant le faisceau d'irradiation ou le faisceau sonde.

Ainsi, il existe un besoin pour améliorer les procédés de lithographie connus.

### Résumé

Un objet de modes de réalisation de la présente invention est de pallier au moins certains inconvénients des procédés de lithographie connus.

Un objet plus particulier de modes de réalisation de la présente invention est d'éviter les inconvénients liés à la formation de copeaux dans une couche thermosensible.

Un autre objet de modes de réalisation de la présente invention est de prévoir une installation de lithographie adaptée à des substrats présentant des discontinuités de surface.

Ainsi, un mode de réalisation de la présente invention prévoit une installation de gravure d'au moins une plaquette revêtue d'une couche photosensible vierge, prête à être gravée, cette plaquette présentant des irrégularités d'épaisseur, dans laquelle la plaquette est disposée pour pouvoir être soumise au balayage d'un faisceau d'irradiation, une feuille transparente au rayonnement auquel la couche photosensible est sensible recouvre la plaquette, et il est prévu un faisceau sonde destiné à se réfléchir sur la partie supérieure de ladite feuille au droit du spot du faisceau d'irradiation sur la couche photosensible.

Selon un mode de réalisation de la présente invention, il est prévu une installation de gravure d'une pluralité de plaquettes, dans laquelle chaque plaquette est disposée dans un réceptacle d'une plaque support soumise au balayage d'un faisceau d'irradiation, et la feuille recouvre l'ensemble des plaquettes et de la plaque support.

Un mode de réalisation de la présente invention prévoit une installation de gravure d'une pluralité de plaquettes revêtues d'une couche photosensible vierge, prêtes à être gravées, des irrégularités d'épaisseur étant formées entre les plaquettes, dans laquelle les plaquettes sont disposées pour pouvoir être soumises au balayage d'un faisceau d'irradiation, une feuille transparente au rayonnement auquel la couche photosensible est sensible recouvre les plaquettes, et il est prévu un faisceau sonde destiné à se réfléchir sur la partie supérieure de ladite feuille au droit du spot du faisceau d'irradiation sur la couche photosensible.

Selon un mode de réalisation de la présente invention, la feuille est collée.

Selon un mode de réalisation de la présente invention, la feuille a une épaisseur de 100 µm.

Selon un mode de réalisation de la présente invention, la feuille est un élément rapporté dont la partie supérieure est sensiblement plane.

Selon un mode de réalisation de la présente invention, la couche photosensible est une couche d'un matériau thermosensible dont l'adhérence à la plaquette est modifiée par suite d'un échauffement.

Selon un mode de réalisation de la présente invention, la couche thermosensible est une couche d'oxyde de platine.

Un mode de réalisation de la présente invention prévoit un procédé de préparation d'une plaquette ou d'une pluralité de plaquettes à graver localement disposées dans des réceptacles d'une plaque support, comprenant les étapes consistant à revêtir la plaquette ou la pluralité de plaquettes d'une couche photosensible, et à revêtir la plaquette ou la pluralité de plaquettes d'une feuille transparente au rayonnement auquel la couche photosensible est sensible.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
les figures 1A à 1C, décrites précédemment, illustrent un procédé classique de formation d'image sur une couche d'un produit photosensible de type thermosensible, dans lequel l'adhérence d'une couche sur un substrat est réduite quand cette couche est soumise à un échauffement ;
les figures 2A à 2E représentent des étapes successives de formation d'image sur une couche thermosensible ;
la figure 3 représente une installation de lithographie ;
la figure 4 représente plus en détail un dispositif optique d'illumination et de contrôle d'une surface photosensible ; et
les figures 5A et 5B sont respectivement une vue de dessus et une vue en coupe selon la ligne BB de la figure 5A d'une partie d'une installation de lithographie.

### Description détaillée

Les figures 2A à 2E illustrent des étapes successives de lithographie.

En figure 2A, sur un substrat 1 que l'on veut graver, on a déposé une couche 2 d'un matériau thermosensible qui présente la propriété selon laquelle, une fois qu'il a été soumis à un rayonnement chauffant, il devient pulvérulent ou en tout cas peu adhérent sur le substrat qui le supporte. Au-dessus de la couche thermosensible 2, on a collé une feuille 11 par l'intermédiaire d'un adhésif 12. Cette feuille 11 est en un matériau transparent à la longueur d'onde à laquelle on veut irradier la couche de matériau thermosensible 2. Le matériau thermosensible est par exemple du PtOₓ qui se transforme en platine une fois qu'il a été soumis à un rayonnement chauffant.

A l'étape illustrée en figure 2B, on procède à une irradiation par un faisceau lumineux 14 qui traverse la feuille 11. Le faisceau 14 est concentré pour former un spot 16 sur la surface du matériau thermosensible, ce qui amène à transformer la partie 18 du matériau photosensible qui a été irradiée. Dans l'exemple représenté, on a considéré le cas où le spot lumineux est déplacé de façon à former une rainure de largeur minimale dans le matériau thermosensible 2.

Comme l'illustre très schématiquement la figure 2C, s'il tend à se produire des décollements et une formation de copeaux 19 dans la zone irradiée 18, ces copeaux sont piégés par la feuille 11 collée sur la couche thermosensible et ne peuvent donc pas venir polluer l'installation.

A l'étape suivante illustrée en figure 2D, on décolle la feuille de protection 11. Ce décollement peut être fait par simple arrachement, ou en soumettant la structure à un produit dissolvant la colle 12. Alors, une partie au moins du matériau irradié 18 part avec la feuille 11 et les parties éventuelles restant en place sont enlevées par des moyens classiques, par exemple par soufflage par un jet de fluide sous pression ou par brossage.

On obtient ainsi la structure représentée en figure 2E dans laquelle une rainure 18 a été formée dans la couche thermosensible.

A des étapes suivantes, non représentées, on se sert du masque constitué par la couche thermosensible gravée pour graver le substrat 1. Ceci peut être fait directement. On pourra aussi utiliser une couche intermédiaire, ou masque dur, qui est gravée et sert de masque pour graver le substrat.

De nombreuses variantes de ce processus apparaîtront à l'homme de l'art. Par exemple, on pourra prévoir que la couche intermédiaire pouvant servir de masque dur soit en un matériau bien isolant thermiquement, pour que l'irradiation de la couche thermosensible entraîne bien une élévation de température au niveau de cette couche et que la chaleur ne diffuse pas dans le substrat, si ce substrat est relativement conducteur thermiquement.

On notera un autre avantage générique de la feuille de protection décrite ci-dessus pour améliorer le suivi d'un dispositif de focalisation sur un matériau photosensible (couramment appelé résine photosensible ou plus simplement résine) que ce matériau soit thermosensible à variation d'adhérence ou non.

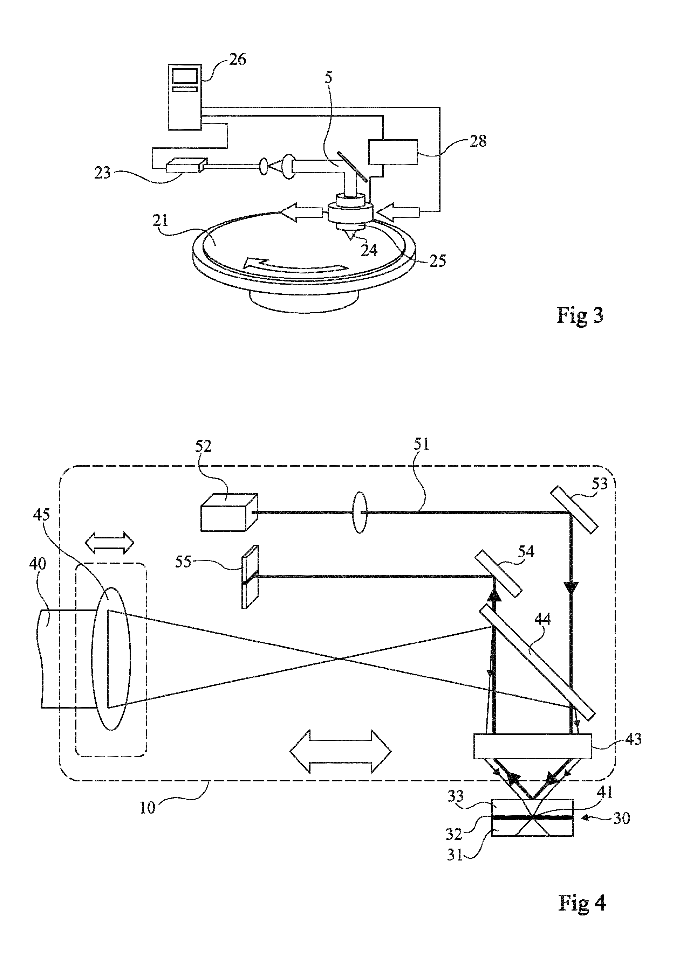

La figure 3 représente un exemple d'installation de lithographie du type utilisé pour la gravure de disques optiques. Un disque 21, revêtu d'une couche photosensible, reçoit le rayonnement d'un laser 23. Un dispositif optique 25 ou tête d'écriture projette le faisceau du laser 23 en un spot quasi-ponctuel 24 sur le disque qui est entraîné en rotation tandis que la tête d'écriture est déplacée en translation perpendiculairement au disque de façon que le spot suive sur le disque un trajet spiral. Un dispositif de modulation 26 est associé au laser 23 pour fournir des faisceaux lumineux intenses en des emplacements choisis. En outre, il est prévu un dispositif de contrôle de focalisation 28 pour asservir un dispositif de déplacement de la tête d'écriture 25 orthogonalement au disque de façon à maintenir en permanence de la lumière focalisée sur le disque. Ce dispositif d'asservissement comprend un faisceau sonde ou faisceau de contrôle qui se réfléchit sur le disque au même point que le spot d'irradiation. Une variation de la distance entre la tête d'écriture et le disque se traduit par un déplacement du faisceau sonde réfléchi.

Une telle installation de lithographie est destinée à fonctionner à très grande vitesse de façon que la durée d'écriture soit aussi brève que possible. Ainsi, le dispositif d'asservissement en position verticale de la tête d'écriture est particulièrement sensible. Si la surface du disque comporte des irrégularités brutales, il en résulte une perte d'asservissement et tout le processus d'écriture est à recommencer.

En pratique, dans certains cas, le disque sur lequel on souhaite effectuer la lithographie présente des discontinuités, par exemple des trous.

Ainsi, on propose ici un procédé permettant d'assurer le suivi de la tête d'écriture même si le disque présente des discontinuités.

La figure 4 représente un dispositif d'asservissement en hauteur de la tête d'écriture par rapport au disque. Une portion du disque est représentée en bas de la figure sous la référence 30. Le disque 31 est revêtu d'une couche photosensible 32. En outre une feuille 33 transparente à l'irradiation de transformation de la résine est collée sur l'ensemble du disque au-dessus de la résine photosensible 32. Un faisceau laser 40 est focalisé en un point 41 de la résine par l'intermédiaire d'un système optique comprenant un dispositif de concentration de lumière 43, une lame réfléchissante 44 et des lentilles 45. L'ensemble du système optique de concentration 43 et des lentilles 45 est réglé pour que la lumière du faisceau se focalise sur le point 41. En outre, il est prévu un faisceau sonde 51 émis par un laser 52 qui, par des réflecteurs 53 et 54, est envoyé dans le système optique de concentration 43 et renvoyé vers un détecteur 55. Le système optique de concentration a été réglé pour que ce faisceau lumineux 51 se réfléchisse non pas comme cela est fait usuellement sur la couche photosensible 32 mais sur la surface supérieure de la feuille 33 au dessus du spot 41. La longueur d'onde du faisceau sonde est choisie pour traverser pratiquement sans atténuation la lame 44 qui, rappelons-le, est réfléchissante pour le faisceau d'irradiation 40.

Ainsi, du fait que la lumière se réfléchit non pas sur la couche photosensible 32 qui reproduit d'éventuels défauts de surface du support 31 que l'on veut graver, mais sur la surface supérieure de la feuille 33, les éventuelles discontinuités d'épaisseur du support sont gommées par la feuille dont tout au plus la surface présente des irrégularités peu abruptes. On peut ainsi, grâce au récepteur 55 et à un système d'asservissement classique asservir en hauteur le système optique de concentration 43 de sorte que le faisceau laser 40 reste focalisé sur la surface de la couche photosensible 32.

Bien entendu, ce système optique est susceptible de nombreuses variantes qui apparaîtront à l'homme de l'art, l'important étant que le système optique de concentration 43 forme une image ponctuelle du faisceau laser sur la surface de la couche photosensible 32 et dévie le faisceau sonde pour qu'il se réfléchisse sur la surface supérieure de la feuille 33.

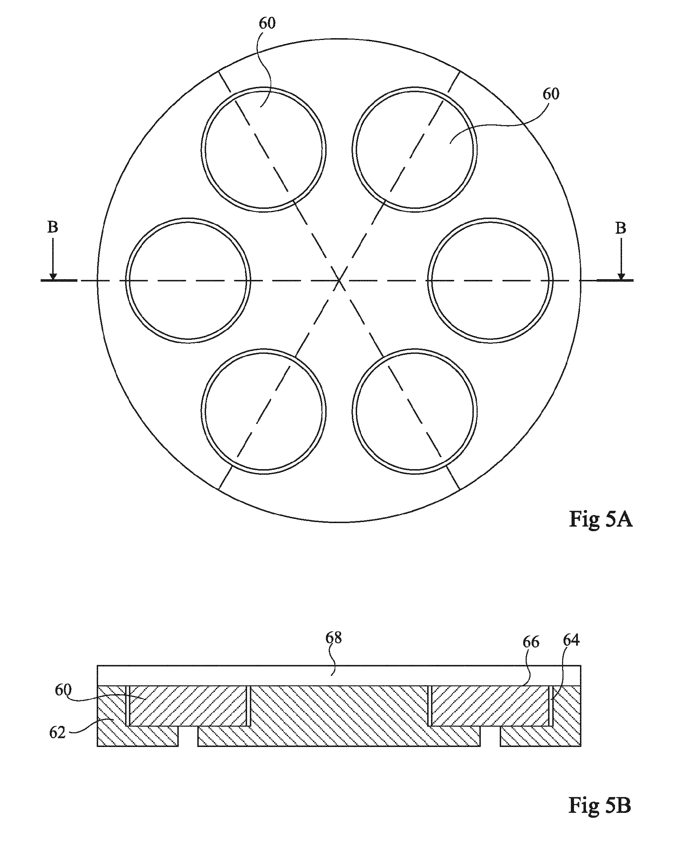

Les figures 5A et 5B sont des vues en coupe d'une installation adaptée à utiliser le système décrit en relation avec la figure 4. Dans ce cas, plusieurs plaquettes à graver, par exemple des verres de montre 60, sont disposées dans des réceptacles d'un disque support 62 de façon que la face supérieure des plaquettes soit au niveau de la face supérieure du disque support. Ce système remplace le disque représenté en figure 3. Bien entendu, il se présentera des irrégularités d'épaisseur (des rainures profondes 64) aux limites entre les plaquettes 60 et le support 62.

Chaque plaquette étant revêtue d'une couche photosensible 66, l'ensemble de la structure représenté en vue de dessus en figure 5A est recouvert d'une feuille transparente 68 et le système sera utilisé de la façon décrite en relation avec la figure 4.

A titre d'exemple de réalisation, le laser d'écriture aura une longueur d'onde de 405 µm, le faisceau sonde une longueur d'onde de 650 µm, et la feuille aura une épaisseur de l'ordre de 100 µm. Cette feuille sera en un matériau ou un empilement de matériaux adaptés à être transparents à 405 nm et à être sensiblement réflecteurs à 650 nm. Cette feuille pourra être en une fine lame de verre ou une feuille de polycarbonate.

Bien entendu, la présente invention est susceptible de nombreuses variantes et modifications qui apparaîtront à l'homme de l'art. Notamment, on a décrit précédemment un système de balayage particulier, de type spiral associé à un disque en rotation. On pourra prévoir tout autre système de balayage, par exemple un balayage en XY.

De plus, divers modes de réalisation avec diverses variantes ont été décrits ci-dessus. L'homme de l'art pourra combiner divers éléments de ces divers modes de réalisation et variantes sans faire preuve d'activité inventive.

## Revendications

1. Installation de gravure d'au moins une plaquette revêtue d'une couche photosensible vierge (32), prête à être gravée, cette plaquette présentant des irrégularités d'épaisseur, dans laquelle :
la plaquette (30) est disposée pour pouvoir être soumise au balayage d'un faisceau d'irradiation,
une feuille (33) transparente au rayonnement auquel la couche photosensible est sensible recouvre la plaquette, et
il est prévu un faisceau sonde destiné à se réfléchir sur la partie supérieure de ladite feuille au droit du spot du faisceau d'irradiation sur la couche photosensible.

2. Installation de gravure d'une pluralité de plaquettes selon la revendication 1, dans laquelle :
chaque plaquette (60) est disposée dans un réceptacle d'une plaque support (62) soumise au balayage d'un faisceau d'irradiation,
ladite feuille (68) recouvre l'ensemble des plaquettes et de la plaque support.

3. Installation de gravure d'une pluralité de plaquettes revêtues d'une couche photosensible vierge (32), prêtes à être gravées, des irrégularités d'épaisseur étant formées entre les plaquettes, dans laquelle :
les plaquettes (30) sont disposées pour pouvoir être soumises au balayage d'un faisceau d'irradiation,
une feuille (33) transparente au rayonnement auquel la couche photosensible est sensible recouvre les plaquettes, et
il est prévu un faisceau sonde destiné à se réfléchir sur la partie supérieure de ladite feuille au droit du spot du faisceau d'irradiation sur la couche photosensible.

4. Installation de gravure selon l'une quelconque des revendications 1 à 3, dans laquelle la feuille est collée.

5. Installation de gravure selon l'une quelconque des revendications 1 à 4, dans laquelle la feuille a une épaisseur de 100 µm.

6. Installation de gravure selon l'une quelconque des revendications 1 à 5, dans laquelle la feuille est un élément rapporté dont la partie supérieure est sensiblement plane.

7. Plaquette utilisée dans l'installation de gravure selon l'une quelconque des revendications 1 à 6, dans laquelle la couche photosensible est une couche d'un matériau thermosensible (2) dont l'adhérence à la plaquette (1) est modifiée par suite d'un échauffement.

8. Plaquette selon la revendication 7, dans laquelle la couche thermosensible est une couche d'oxyde de platine.

9. Procédé de préparation d'une plaquette ou d'une pluralité de plaquettes à graver localement disposées dans des réceptacles d'une plaque support, comprenant les étapes suivante :
revêtir la plaquette ou la pluralité de plaquettes d'une couche photosensible, et
revêtir la plaquette ou la pluralité de plaquettes d'une feuille transparente au rayonnement auquel la couche photosensible est sensible.
